# EUROPÄISCHE PATENTANMELDUNG

(11) **EP 3 723 244 A1**
(43) Veröffentlichungstag der Anmeldung: **14.10.2020**
(21) Anmeldenummer: 19167872.1
(22) Anmeldetag: 08.04.2019
(51) Int. Cl.: H02K 3/50, H02K 15/00

(54) **WICKELKOPFANORDNUNG FÜR EINE ELEKTRISCHE ROTIERENDE MASCHINE**

(71) Anmelder: Siemens Aktiengesellschaft, 80333 München (DE)
(72) Erfinder: Brach, Karsten, 13589 Berlin (DE); Jensen, Jens Dahl, 14050 Berlin (DE); Rauch, Hartmut, 12203 Berlin (DE); Rehme, Olaf, 20148 Hamburg (DE); Schneck, Jakob, 10245 Berlin (DE); Stier, Oliver, 12163 Berlin (DE)

(57) **Zusammenfassung**

Die Erfindung betrifft eine Wickelkopfanordnung (4) für eine elektrische rotierende Maschine. Um eine Wickelkopfanordnung (24) anzugeben, die, im Vergleich zum Stand der Technik, einfacher und kostengünstiger herzustellen ist, wird vorgeschlagen, dass die Wickelkopfanordnung (24) mindestens einen Grundkörper (26, 28) und eine Mehrzahl von Leitern (30) aus einem ersten metallischen Werkstoff aufweist, wobei der Grundkörper (26, 28) einen elektrisch leitfähigen Werkstoff mit einer elektrisch isolierenden Beschichtung (35) umfasst, wobei die Leiter (30) über die elektrisch isolierende Beschichtung (35) mit dem Grundkörper (26, 28) verbunden sind und wobei die Leiter (30) mittels eines ersten additiven Fertigungsverfahrens auf die elektrisch isolierende Beschichtung (35) aufgebracht sind.

## Beschreibung

Die Erfindung betrifft eine Wickelkopfanordnung für eine elektrische rotierende Maschine.

Die Erfindung betrifft ferner einen Stator für eine elektrische rotierende Maschine, welcher ein magnetfeldführendes Statorelement und mindestens eine derartige Wickelkopfanordnung aufweist.

Die Erfindung betrifft überdies eine elektrische rotierende Maschine mit mindestens einem derartigen Stator.

Darüber hinaus betrifft die Erfindung ein Verfahren zur Herstellung einer Wickelkopfanordnung für eine elektrische rotierende Maschine.

Üblicherweise werden die Statorwicklungen einer derartigen elektrischen rotierenden Maschine, welche mit einer Leistung von mindestens einem Megawatt betreibbar ist, als Formspulen, ausgeführt. Formspulen werden beispielsweise mittels Ziehen, Gießen oder Pulvermetallurgie hergestellt. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es erforderlich, die Wickelköpfe zu kühlen. Zur Kühlung wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwändige Versteifungsmaßnahmen aufgrund der großen Leiterlängen erforderlich, um unzulässige Schwingungen und Verformungen im Betrieb zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Wickelköpfe der Formspulen werden mit hohem Aufwand halbautomatisch gefertigt, beispielsweise indem Kupferleiter so gebogen werden, dass sie passend in die Nuten platzierbar sind. Eine anschließende Verbindung der jeweiligen Kupferleiter, eine Isolierung der Verbindungsstellen und eine Versteifung der Kupferleiter gegeneinander erfolgt manuell unter hohem Aufwand. Prinzipbedingt ist es nur unter hohem Aufwand, beispielsweise unter Verwendung unterschiedlicher Leiterlängen, welche durch Löten verbunden werden, möglich, unterschiedliche Leitergeometrien in den Nuten und in den Wickelköpfen zu realisieren.

Bei Zahnspulenwicklungen insbesondere in Flachdrahtausführung kann der Abstand benachbarter Nuten nur so klein sein, wie es der einzuhaltende Biegeradius des isolierten Kupferleiters erlaubt.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift EP 3 297 131 A1 beschreibt einen Stator für eine elektrische rotierende Maschine, welcher ein Statorblechpaket mit Spulenstäben und mindestens eine Statorwickelkopfplatine mit einem isolierenden Grundkörper aufweist. Um die axiale Länge des Stators zu verringern, wird vorgeschlagen, dass in den isolierenden Grundkörper Leiterbahnen integriert sind, wobei die mindestens eine Statorwckelkopfplatine auf einer Stirnseite des Statorblechpakets aufliegt und wobei die Leiterbahnen mit den Spulenstäben stoffschlüssig verbunden sind.

Der Erfindung liegt die Aufgabe zugrunde, eine Wickelkopfanordnung für eine elektrische rotierende Maschine anzugeben, welche, im Vergleich zum Stand der Technik, einfacher und kostengünstiger herzustellen ist.

Die Aufgabe wird erfindungsgemäß durch eine Wickelkopfanordnung für eine elektrische rotierende Maschine mit mindestens einem Grundkörper und einer Mehrzahl von Leitern aus einem ersten metallischen Werkstoff gelöst, wobei der Grundkörper einen elektrisch leitfähigen Werkstoff mit einer elektrisch isolierenden Beschichtung umfasst, wobei die Leiter über die elektrisch isolierende Beschichtung mit dem Grundkörper verbunden sind, wobei die Leiter mittels eines ersten additiven Fertigungsverfahrens auf die elektrisch isolierende Beschichtung aufgebracht sind.

Darüber hinaus wird die Aufgabe erfindungsgemäß durch einen Stator für eine elektrische rotierende Maschine gelöst, welcher ein magnetfeldführendes Statorelement und mindestens eine derartige Wickelkopfanordnung aufweist.

Ferner wird die Aufgabe erfindungsgemäß durch eine elektrische rotierende Maschine mit mindestens einem derartigen Stator gelöst.

Zudem wird die Aufgabe erfindungsgemäß durch ein Verfahren zur Herstellung einer Wickelkopfanordnung für eine elektrische rotierende Maschine gelöst, wobei ein Grundkörper durch zumindest teilweises Beschichten eines elektrisch leitfähigen Werkstoffs mit einer elektrisch isolierenden Beschichtung hergestellt wird, wobei eine Mehrzahl von Leitern aus einem ersten metallischen Werkstoff mit dem Grundkörper dadurch verbunden werden, dass die Leiter mittels eines ersten additiven Fertigungsverfahrens auf die elektrisch isolierende Beschichtung aufgebracht werden.

Die in Bezug auf die Wickelkopfanordnung nachstehend angeführten Vorteile und bevorzugten Ausgestaltungen lassen sich sinngemäß auf den Stator, die elektrische rotierende Maschine und das Verfahren übertragen.

Der Erfindung liegt die Überlegung zugrunde, die Herstellung einer Wickelkopfanordnung durch die Verwendung eines additiven Fertigungsverfahrens zu optimieren, wobei Leiter mittels eines ersten additiven Fertigungsverfahrens auf einen Grundkörper aufgebracht werden. Additive Fertigungsverfahren sind beispielsweise 3D-Druck, Siebdruck oder thermische Spritzverfahren. Ein additives Fertigungsverfahren ermöglicht die Realisierung komplexer und kompakter Strukturen. Beschichtet man den Grundkörper mit einer elektrisch isolierenden Beschichtung, beispielsweise aus einem keramischen Werkstoff, so ist für den Grundkörper ein elektrisch leitfähiger Werkstoff, beispielsweise ein Metall, eine elektrisch leitfähige Keramik oder ein elektrisch leitfähiger Kunststoff verwendbar. Ein elektrisch leitfähiger Werkstoff weist bei Raumtemperatur eine elektrische Leitfähigkeit von mindestens 1,0 MS/m auf. Die isolierende Beschichtung hingegen hat einen spezifischen elektrischen Widerstand von mindestens 1010 Ω·cm. Ein Grundkörper aus einem elektrisch leitfähigen Werkstoff, beispielswiese aus Aluminium, verhält sich beispielsweise robuster beim additiven Aufbringen der Leiter, ist leichter und/oder präziser, beispielsweise durch CNC-Fräsen, verarbeitbar und ist kostengünstiger in der mechanischen Bearbeitung.

In einer Ausführungsform ist die elektrisch isolierende Beschichtung durch Anodisieren eines zweiten metallischen Werkstoffs hergestellt. Unter einer Anodisierung ist eine kontrollierte oxidative Umwandlung eines, insbesondere metallischen, Werkstoffs zu verstehen. Die Anodisierung wird beispielsweise mittels einer Elektrolyse in einer wässrigen Lösung durchgeführt. Der zweite metallische Werkstoff ist beispielsweise Aluminium oder Beryllium. Beispielsweise wird der zweite metallische Werkstoff auf den Grundkörper aufgetragen und anschließend zu einer homogenen und durchschlagfesten elektrisch isolierenden Metalloxidschicht, beispielsweise aus Aluminiumoxid oder Berylliumoxid, anodisiert. Durch Anodisieren werden so die Leiter einfach und kostengünstig elektrisch isolierend mit dem Grundkörper verbunden.

Bei einer weiteren Ausgestaltung ist der Grundkörper aus einem zweiten metallischen Werkstoff hergestellt und die elektrisch isolierende Beschichtung des Grundkörpers ist durch Anodisieren des zweiten metallischen Werkstoffs hergestellt. Beispielsweise ist der Grundkörper aus Aluminium hergestellt, wobei die Oberfläche des Grundkörpers aus Aluminium zu einer elektrisch isolierenden Beschichtung aus Aluminiumoxid anodisiert wird. Neben der einfachen und kostengünstigen Herstellung durch Anodisieren ist der Grundkörper durch eine stoffschlüssige Verbindung zwischen dem zweiten metallischen Werkstoff und der elektrisch isolierenden Beschichtung mechanisch sehr robust.

Eine weitere Ausführungsform sieht vor, dass die Leiter mittels eines ersten thermischen Spritzverfahrens, insbesondere mittels Kaltgasspritzen, auf die elektrisch isolierende Beschichtung aufgesprüht sind. Thermische Spritzverfahren sind beispielsweise Lichtbogenspritzen, Plasmaspritzen, Flammspritzen oder Kaltgasspritzen. Mit Hilfe eines thermischen Spritzverfahrens sind, im Vergleich zu anderen additiven Fertigungsverfahren, dicke Schichten, beispielsweise im Millimeterbereich und im Zentimeterbereich, in kurzer Zeit und geometrisch sehr flexibel herstellbar. Durch ein thermisches Spritzverfahren wird der Fertigungsprozess somit einfacher und kostengünstiger.

In einer Ausführungsform weist die elektrisch isolierende Beschichtung eine im Wesentlichen konstante erste Dicke im Bereich von 150 µm bis 1000 µm auf. Eine im Wesentlichen konstante erste Dicke weist eine Schichtdickenabweichung von höchstens ±10%, insbesondere von ±5%, auf. Durch eine derartige Schichtdicke wird eine ausreichende Isolation und Durchschlagsfestigkeit erreicht.

Eine weitere Ausgestaltung sieht vor, dass die Leiter eine elektrisch isolierende Leiterbeschichtung aufweisen, welche durch Anodisieren hergestellt ist. Durch Anodisieren ist die Leiterisolation auch bei komplexen Leiteranordnungen einfach und kostengünstig aufbringbar.

In einer Ausführungsform ist auf die Leiter ein dritter metallischer Werkstoff, insbesondere mittels Kaltgasspritzen, additiv aufgebracht, wobei die elektrisch isolierende Leiterbeschichtung durch zumindest teilweises Anodisieren des dritten metallischen Werkstoffs hergestellt ist. Beispielsweise sind die Leiter aus Kupfer hergestellt und es wird Aluminium auf die Leiter aufgebracht, welches zu einer elektrisch isolierenden Leiterbeschichtung aus Aluminiumoxid anodisiert wird. Dies ist vorteilhaft, da sowohl eine optimale Leitfähigkeit der Leiter als auch eine optimale Isolation und Durchschlagsfestigkeit der elektrisch isolierende Leiterbeschichtung erreicht wird.

Bei einer weiteren Ausgestaltung sind die Leiter über zumindest je eine Zwischenschicht mit der elektrisch isolierenden Beschichtung verbunden. Die Zwischenschicht ist beispielsweise aus Silber, Aluminium, Antimon, Magnesium, Zinn, Zink, Blei, Tantal oder aus einer Mischung und/oder aus mindestens einer Legierung davon hergestellt. Durch eine derartige Zwischenschicht wird eine Beschädigung der elektrisch isolierenden Beschichtung beim Aufbringen der Leiter vermieden.

In einer weiteren Ausführungsform ist die Zwischenschicht mittels eines zweiten additiven Fertigungsverfahrens auf die elektrisch isolierende Beschichtung aufgebracht, wobei sich das zweite additiven Fertigungsverfahren vom ersten additiven Fertigungsverfahren unterscheidet. Während der metallische Werkstoff der Leiter eine möglichst hohe elektrische Leitfähigkeit aufweist, ist der Werkstoff der Zwischenschicht dafür geeignet, eine mechanisch und thermisch stabile Verbindung zwischen der elektrisch isolierenden Beschichtung des Grundkörpers und den jeweiligen Leitern auszubilden. Insbesondere ist das zweite additive Fertigungsverfahren daraufhin optimiert, die Zwischenschicht schonend auf die elektrisch isolierende Beschichtung aufzubringen. Darüber hinaus wird die Zwischenschicht mit einem additiven Fertigungsverfahren aufgesprüht, um ein durchgängiges und einheitliches Fertigungsverfahren zu realisieren.

Eine weitere Ausgestaltung sieht vor, dass das erste additive Fertigungsverfahren ein erstes thermisches Spritzverfahren ist, wobei das zweite additive Fertigungsverfahren ein zweites thermisches Spritzverfahren ist, wobei sich das zweite thermische Spritzverfahren hinsichtlich einer Geschwindigkeit und/oder einer Größe der Partikel vom ersten thermischen Spritzverfahren unterscheidet. Beispielsweise bei der Verwendung eines weichen Werkstoffs wie Zinn ist eine geringere kinetische Energie erforderlich, damit die Festkörperpartikel beim Auftreffen eine dichte, fest haftende Schicht bilden. Dadurch werden Beschädigungen der elektrisch isolierenden Beschichtung des Grundkörpers vermieden.

In einer weiteren Ausführungsform ist die Zwischenschicht zumindest teilweise in Nuten des Grundkörpers angeordnet, wobei die Nuten des Grundkörpers eine Profilierung aufweisen, über welche eine formschlüssige Verbindung hergestellt wird. Beispielsweise ist die Profilierung schwalbenschwanzförmig oder hammerkopfförmig ausgestaltet. Durch die Profilierung wird die formschlüssige Verbindung stabilisiert. Durch eine Anordnung in Nuten ist die Zwischenschicht geschützt vor äußeren Einflüssen.

Im Folgenden wird die Erfindung anhand der in den Figuren dargestellten Ausführungsbeispiele näher beschrieben und erläutert.
- FIG 1: einen Längsschnitt einer elektrischen rotierenden Maschine,
- FIG 2: eine dreidimensionale Darstellung einer Wickelkopfanordnung für eine elektrische rotierende Maschine,
- FIG 3: einen vergrößerten Querschnitt einer ersten Ausführungsform einer Wickelkopfanordnung,
- FIG 4: einen Querschnitt von Leitern einer ersten Ausführungsform der Wickelkopfanordnung,
- FIG 5: einen Querschnitt von Leitern einer zweiten Ausführungsform der Wickelkopfanordnung,
- FIG 6: einen Querschnitt von Leitern einer dritten Ausführungsform der Wickelkopfanordnung und
- FIG 7: einen Querschnitt von Leitern einer vierten Ausführungsform der Wickelkopfanordnung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

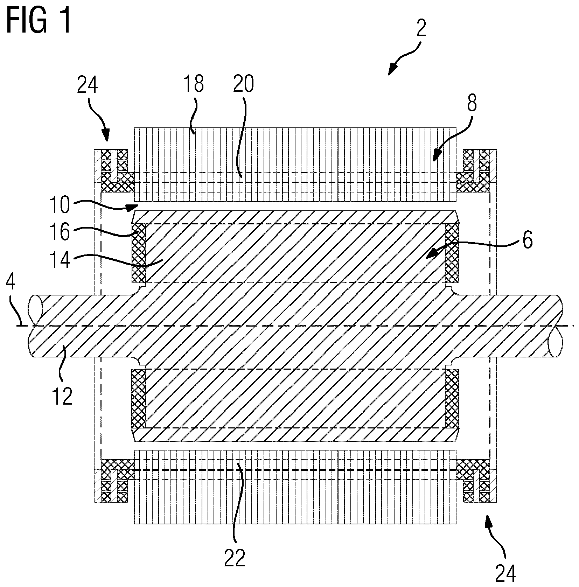

FIG 1 zeigt einen Längsschnitt einer elektrischen rotierenden Maschine 2, welche beispielhaft als Synchronmaschine ausgeführt ist. Die Synchronmaschine weist einen um eine Rotationsachse 4 rotierbaren Rotor 6, der exemplarisch als Schenkelpolläufer ausgeführt ist, und einen den Rotor 6 umgebenden Stator 8 auf. Zwischen dem Rotor 6 und dem Stator 8 befindet sich ein Spalt 10, der insbesondere als Luftspalt ausgeführt ist. Die Rotationsachse 4 definiert eine Axialrichtung, eine Radialrichtung und eine Umfangsrichtung. Der Rotor 6 umfasst eine Welle 12 und Schenkelpole 14 mit einer Erregerwicklung 16. Alternativ weist der Rotor 6 Permanentmagnete oder einen Kurzschlusskäfig auf.

Der Stator 8 umfasst ein magnetfeldführendes, insbesondere wirbelstromunterdrückendes, Statorelement 18, welches beispielsweise als Blechpaket ausgeführt ist, und eine Statorwicklung 20. Die Statorwicklung 20 umfasst Spulenstäbe 22, welche beispielsweise aus Kupfer hergestellt sind und in Axialrichtung durch das magnetfeldführende Statorelement 18 verlaufen. Die axialen Enden der Spulenstäbe 22 sind jeweils mit einer Wickelkopfanordnung 24 verbunden. Anschlüsse der Statorwicklung 20, beispielsweise an einen Klemmenkasten, sind aus Gründen der Übersichtlichkeit nicht dargestellt.

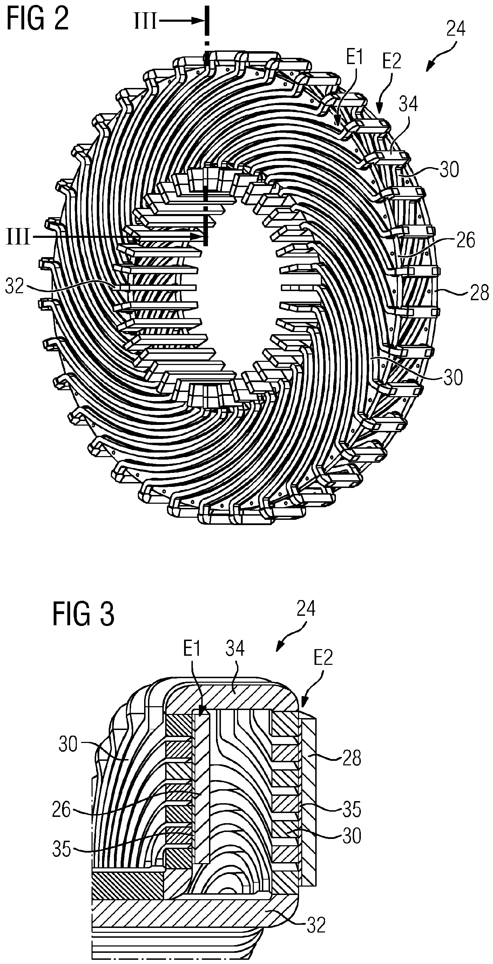

FIG 2 zeigt eine dreidimensionale Darstellung einer Wickelkopfanordnung 24 für eine elektrische rotierende Maschine 2. Die Wickelkopfanordnung 24 umfasst beispielhaft zwei in Axialrichtung hintereinander angeordnete Ebenen E1, E2 mit jeweils einem Grundkörper 26, 28. Die Wickelkopfanordnung 24 ist für eine Zweischichtwicklung vorgesehen. Der Grundkörper 26, 28 weist im Wesentlichen eine hohlzylindrische Form auf. Jeder Ebene ist eine Mehrzahl von Leitern 30 zugeordnet, wobei die Leiter 30 mit dem jeweiligen Grundkörper 26, 28 verbunden sind. Die Leiter 30 weisen beispielhaft einen rechteckigen oder quadratischen Leiterquerschnitt auf und sind aus einem ersten metallischen Werkstoff, beispielsweise Kupfer, mit einer Leitfähigkeit von mindestens 50 MS/m hergestellt. An den Leitern 30 sind metallische Verbindungsabschnitte 32 angeordnet, um eine Verbindung der Leiter 30 zu den jeweiligen Spulenstäben 22 herzustellen. Darüber hinaus sind die Leiter 30 der jeweiligen Ebenen E1, E2 über elektrisch leitfähige Verbindungselemente 34 verbunden. Beispielsweise sind die Verbindungselemente 34 aus Kupfer hergestellt. Die weitere Ausgestaltung der Wickelkopfanordnung 24 in FIG 2 entspricht der in FIG 1.

FIG 3 zeigt einen vergrößerten Querschnitt einer ersten Ausführungsform einer Wickelkopfanordnung 24. Die Grundkörper 26, 28 sind aus einem elektrisch leitfähigen Werkstoff, beispielsweise einem zweiten metallischen Werkstoff wie Aluminium, hergestellt, wobei der elektrisch leitfähige Werkstoff eine elektrisch isolierende Beschichtung 35 umfasst.

Die Leiter 30 sind aus elektrisch leitfähigen Festkörperpartikeln hergestellt, welche mittels eines ersten thermischen Spritzverfahrens, insbesondere mittels Kaltgasspritzen, auf die elektrisch isolierende Beschichtung 35 des jeweiligen Grundkörpers 26, 28 aufgesprüht werden. Die elektrisch leitfähigen Festkörperpartikel enthalten beispielsweise Kupfer, wobei mittels des ersten thermischen Spritzverfahrens eine elektrische Leitfähigkeit von mindestens 50 MS/m erzielt wird. Durch die isolierende Beschichtung 35 sind die Leiter 30 isoliert vom elektrisch leitfähigen Werkstoff des jeweiligen Grundkörpers 26, 28 angeordnet und mit diesem über die isolierende Beschichtung 35 verbunden. Die weitere Ausgestaltung der Wickelkopfanordnung 24 in FIG 3 entspricht der in FIG 2.

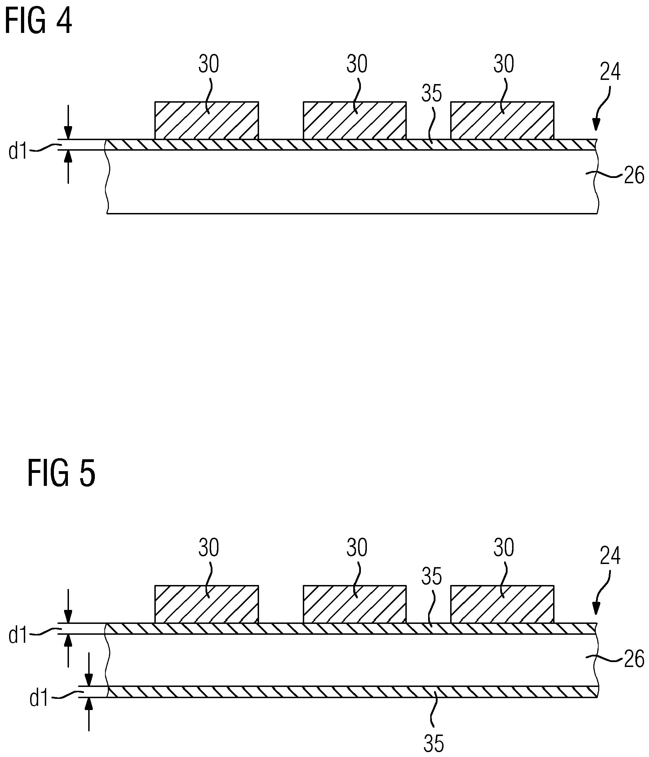

FIG 4 zeigt einen Querschnitt von Leitern 30 einer ersten Ausführungsform der Wickelkopfanordnung 24, die mit einem Grundkörper 26 verbunden sind. Der Grundkörper 26 ist aus einem elektrisch leitfähigen Werkstoff gefertigt und umfasst auf der den Leitern 30 zugewandten Oberfläche eine elektrisch isolierende Beschichtung 35, über welche die Leiter 30 mit dem Grundkörper 26 verbunden sind. Durch die elektrisch isolierende Beschichtung 35 wird ein Kurzschluss der Leiter 30 über den elektrisch leitfähigen Werkstoff des Grundkörpers 26 verhindert. Die elektrisch isolierende Beschichtung 35 weist eine im Wesentlichen konstante erste Dicke d1 im Bereich von 150 µm bis 1000 pm, insbesondere von 200 µm bis 500 pm, auf. Beispielsweise ist der Grundkörper 26 aus einem zweiten metallischen Werkstoff, insbesondere aus Aluminium, hergestellt. Die elektrisch isolierende Beschichtung 35 wird durch Anodisieren, das heißt durch eine kontrollierte oxidative Umwandlung, des zweiten metallischen Werkstoffs, hergestellt. Die Anodisierung wird beispielsweise mittels einer Elektrolyse in einer wässrigen Lösung durchgeführt. Durch Anodisieren der Aluminiumoberfläche wird eine homogene und durchschlagfeste Aluminiumoxidschicht ausgebildet, über die die Leiter 30 elektrisch isoliert mit dem Grundkörper 26 verbunden sind. Die weitere Ausgestaltung der Wickelkopfanordnung 24 in FIG 4 entspricht der in FIG 3.

FIG 5 zeigt einen Querschnitt von Leitern 30 einer zweiten Ausführungsform der Wickelkopfanordnung 24. Die Oberfläche des Grundkörpers 26 in FIG 5 ist im Wesentlichen vollständig anodisiert, sodass auf der gesamten Oberfläche des Grundkörpers 26 eine homogene und durchschlagfeste isolierende Beschichtung 35 ausgebildet ist. Die weitere Ausgestaltung der Wickelkopfanordnung 24 in FIG 5 entspricht der in FIG 4.

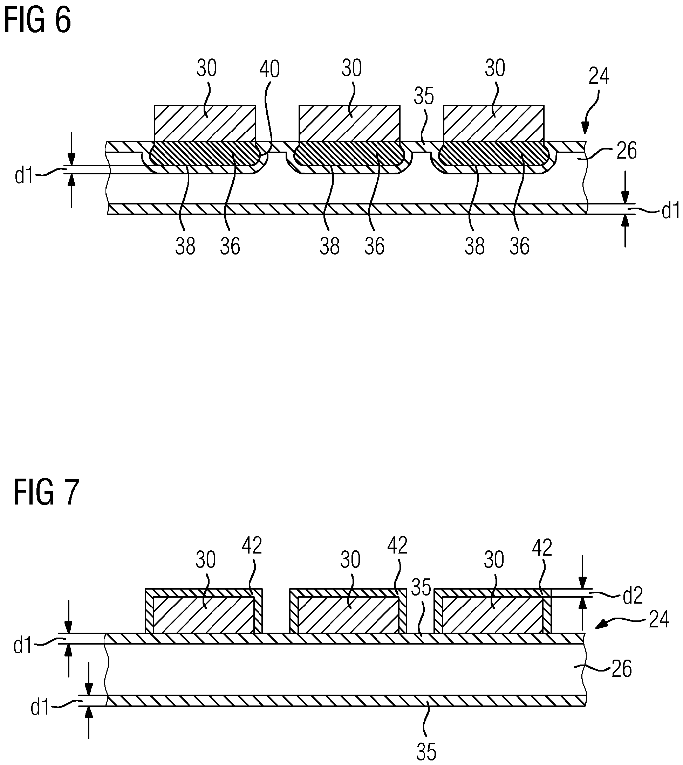

FIG 6 zeigt einen Querschnitt von Leitern 30 einer dritten Ausführungsform der Wickelkopfanordnung 24, wobei die Leiter 30 über je eine Zwischenschicht 36 mit dem Grundkörper 26 verbunden sind, wobei die Zwischenschicht 36 ein Leiterfundament bildet und über eine formschlüssige Verbindung mit dem jeweiligen isolierenden Grundkörper 26, 28 verbunden ist. Die Zwischenschicht 36 ist jeweils in Nuten 38 des Grundkörpers 26 angeordnet, wobei die Zwischenschicht 36 im Wesentlichen bündig mit der den Leitern 30 zugewandten Oberfläche des Grundkörpers 26 abschließt. Die Oberfläche des Grundkörpers 26 ist auch innerhalb der Nuten 38 anodisiert, sodass auf der gesamten Oberfläche des Grundkörpers 26 eine homogene und durchschlagfeste isolierende Beschichtung 35 ausgebildet ist. Die beschichteten Nuten 38 weisen eine Profilierung 40 auf, über welche eine formschlüssige Verbindung mit dem isolierenden Grundkörper 26 hergestellt wird. Insbesondere ist die Nut 38 nach außen hin sich verjüngend profiliert, um eine formschlüssige Verbindung der jeweiligen Zwischenschicht 36 mit dem isolierenden Grundkörper 26 zu gewährleisten. Beispielsweise ist die Nut 38 als Hammerkopfnut oder als Schwalbenschwanznut ausgeführt. Die Zwischenschicht 36 ist aus einem Werkstoff hergestellt, welcher sich vom ersten metallischen Werkstoff der Leiter 30 und vom zweiten metallischen Werkstoff des Grundkörpers unterscheidet. Die Zwischenschicht 36 ist beispielsweise aus Silber, Aluminium, Antimon, Magnesium, Zinn, Zink, Blei, Tantal oder aus einer Mischung und/oder aus mindestens einer Legierung davon hergestellt. Optional weist die Zwischenschicht 36 zusätzliche Füllstoffe, wie beispielsweise einen keramischen Werkstoff, auf.

Die Zwischenschicht 36 wird mittels eines zweiten thermischen Spritzverfahrens, insbesondere mittels Kaltgasspritzen, auf die isolierende Beschichtung 35 des Grundkörpers 26 aufgesprüht. Um die Nut 38 trotz der Profilierung 40 homogen auszufüllen, werden die Partikel des zweiten thermischen Spritzverfahrens aus unterschiedlichen Richtungen in die jeweilige Nut 38 gesprüht. Alternativ wird die Zwischenschicht 36 auf andere Weise, beispielsweise durch Gießen oder durch ein galvanisches Verfahren, in die Nuten 38 eingebracht.

Die Leiter 30 werden mittels eines ersten thermischen Spritzverfahrens, insbesondere mittels Kaltgasspritzen, auf die Zwischenschicht 36 aufgesprüht. Insbesondere bei der Verwendung von Partikeln aus Kupfer, welche mittels Kaltgasspritzen auf die Zwischenschicht 36 aufgesprüht werden, ermöglicht die Zwischenschicht 36 eine bessere Haftung und eine größere Partikeldichte, da die Partikel mit einer größeren Geschwindigkeit auf die Zwischenschicht 36 als auf die isolierende Beschichtung 35 des Grundkörpers 26 aufsprühbar sind. Die weitere Ausgestaltung der Wickelkopfanordnung 24 in FIG 6 entspricht der in FIG 5.

FIG 7 zeigt einen Querschnitt von Leitern 30 einer vierten Ausführungsform der Wickelkopfanordnung 24. Die Leiter 30, welche aus Kupfer hergestellt sind, weisen eine elektrisch isolierende Leiterbeschichtung 42 auf, welche eine zweite Dicke d2 im Bereich von 150 µm bis 1000 pm, insbesondere von 200 µm bis 500 pm, aufweist und durch Anodisieren hergestellt wird.

Bei der Herstellung der elektrischen isolierenden Leiterbeschichtung 42 wird auf die Kupferleiter 30 ein dritter metallischer Werkstoff, insbesondere mittels Kaltgasspritzen, aufgesprüht, wobei der dritte metallische Werkstoff beispielsweise Aluminium enthält. Durch zumindest teilweise Anodisierung des dritten metallischen Werkstoffs, beispielsweise durch kontrollierte oxidative Umwandlung von Aluminium in Aluminiumoxid, wird eine homogene durchschlagfeste isolierenden Leiterbeschichtung 42 ausgebildet. Die weitere Ausgestaltung der Wickelkopfanordnung 24 in FIG 7 entspricht der in FIG 5.

Zusammenfassend betrifft die Erfindung eine Wickelkopfanordnung 4 für eine elektrische rotierende Maschine. Um eine Wickelkopfanordnung 24 anzugeben, die, im Vergleich zum Stand der Technik, einfacher und kostengünstiger herzustellen ist, wird vorgeschlagen, dass die Wickelkopfanordnung 24 mindestens einen Grundkörper 26, 28 und eine Mehrzahl von Leitern 30 aus einem ersten metallischen Werkstoff aufweist, wobei der Grundkörper 26, 28 einen elektrisch leitfähigen Werkstoff mit einer elektrisch isolierenden Beschichtung 35 umfasst, wobei die Leiter 30 über die elektrisch isolierende Beschichtung 35 mit dem Grundkörper 26, 28 verbunden sind und wobei die Leiter 30 mittels eines ersten additiven Fertigungsverfahrens auf die elektrisch isolierende Beschichtung 35 aufgebracht sind.

## Patentansprüche

1. Wickelkopfanordnung (4) für eine elektrische rotierende Maschine (2) mit mindestens einem Grundkörper (26, 28) und einer Mehrzahl von Leitern (30) aus einem ersten metallischen Werkstoff,
wobei der Grundkörper (26, 28) einen elektrisch leitfähigen Werkstoff mit einer elektrisch isolierenden Beschichtung (35) umfasst,
wobei die Leiter (30) über die elektrisch isolierende Beschichtung (35) mit dem Grundkörper (26, 28) verbunden sind, wobei die Leiter (30) mittels eines ersten additiven Fertigungsverfahrens auf die elektrisch isolierende Beschichtung (35) aufgebracht sind.

2. Wickelkopfanordnung (4) nach Anspruch 1,
wobei die elektrisch isolierende Beschichtung (35) durch Anodisieren eines zweiten metallischen Werkstoffs hergestellt ist.

3. Wickelkopfanordnung (4) nach einem der Ansprüche 1 oder 2, wobei der Grundkörper (26, 28) aus einem zweiten metallischen Werkstoff hergestellt ist und
wobei die elektrisch isolierende Beschichtung (35) des Grundkörpers (26, 28) durch Anodisieren des zweiten metallischen Werkstoffs hergestellt ist.

4. Wickelkopfanordnung (4) nach einem der vorherigen Ansprüche,
wobei die Leiter (30) mittels eines ersten thermischen Spritzverfahrens, insbesondere mittels Kaltgasspritzen, auf die elektrisch isolierende Beschichtung (35) aufgesprüht sind.

5. Wickelkopfanordnung (4) nach einem der vorherigen Ansprüche,
wobei die elektrisch isolierende Beschichtung (35) eine im Wesentlichen konstante erste Dicke (d1) im Bereich von 150 µm bis 1000 µm aufweist.

6. Wickelkopfanordnung (4) nach einem der vorherigen Ansprüche,
wobei die Leiter (30) eine elektrisch isolierende Leiterbeschichtung (42) aufweisen, welche durch Anodisieren hergestellt ist.

7. Wickelkopfanordnung (4) nach Anspruch 6,
wobei auf die Leiter (30) ein dritter metallischer Werkstoff, insbesondere mittels Kaltgasspritzen, additiv aufgebracht ist und
wobei die elektrisch isolierende Leiterbeschichtung (42) durch zumindest teilweises Anodisieren des dritten metallischen Werkstoffs hergestellt ist.

8. Wickelkopfanordnung (4) nach einem der vorherigen Ansprüche,
wobei die Leiter (30) über zumindest je eine Zwischenschicht (36) mit der elektrisch isolierenden Beschichtung (35) verbunden sind.

9. Wickelkopfanordnung (4) nach Anspruch 8,
wobei die Zwischenschicht (36) mittels eines zweiten additiven Fertigungsverfahrens auf die elektrisch isolierende Beschichtung (35) aufgebracht ist,
wobei sich das zweite additiven Fertigungsverfahren vom ersten additiven Fertigungsverfahren unterscheidet.

10. Wickelkopfanordnung (4) nach Anspruch 9,
wobei das erste additive Fertigungsverfahren ein erstes thermisches Spritzverfahren ist,
wobei das zweite additive Fertigungsverfahren ein zweites thermisches Spritzverfahren ist,
wobei sich das zweite thermische Spritzverfahren hinsichtlich einer Geschwindigkeit und/oder einer Größe der Partikel vom ersten thermischen Spritzverfahren unterscheidet.

11. Wickelkopfanordnung (4) nach einem der Ansprüche 8 bis 10,
wobei die Zwischenschicht (36) zumindest teilweise in Nuten (38) des Grundkörpers (26, 28) angeordnet ist,
wobei die Nuten (38) des Grundkörpers (26) eine Profilierung (40) aufweisen, über welche eine formschlüssige Verbindung hergestellt wird.

12. Stator (8) für eine elektrische rotierende Maschine (2), welcher ein magnetfeldführendes Statorelement (18) und mindestens eine Wickelkopfanordnung (24) nach einem der Ansprüche 1 bis 11 aufweist.

13. Stator (8) nach Anspruch 12,
welcher Spulenstäbe (22) aufweist, die zumindest teilweise im magnetfeldführenden Statorelement (18) verlaufend angeordnet und mit den Leitern (30) der Wickelkopfanordnung (24) verbunden sind,
wobei die Leiter (30) im Wesentlichen senkrecht zu den Spulenstäben (22) angeordnet sind.

14. Elektrische rotierende Maschine (2) mit mindestens einem Stator (8) nach einem der Ansprüche 12 oder 13.

15. Verfahren zur Herstellung einer Wickelkopfanordnung (24) für eine elektrische rotierende Maschine (2),
wobei ein Grundkörper (26, 28) durch zumindest teilweises Beschichten eines elektrisch leitfähigen Werkstoffs mit einer elektrisch isolierenden Beschichtung (35) hergestellt wird, wobei eine Mehrzahl von Leitern (30) aus einem ersten metallischen Werkstoff mit dem Grundkörper (26, 28) dadurch verbunden werden, dass die Leitern (30) mittels eines ersten additiven Fertigungsverfahrens auf die elektrisch isolierende Beschichtung (35) aufgebracht werden.

16. Verfahren nach Anspruch 15,
wobei die elektrisch isolierende Beschichtung (35) durch Anodisieren eines zweiten metallischen Werkstoffs hergestellt wird.

17. Verfahren nach Anspruch 16,
wobei der Grundkörper (26, 28) aus einem zweiten metallischen Werkstoff hergestellt wird und
wobei die elektrisch isolierende Beschichtung (35) des Grundkörpers (26, 28) durch Anodisieren des zweiten metallischen Werkstoffs hergestellt wird.

18. Verfahren nach einem der Ansprüche 15 bis 17,
wobei die Leiter (30) mittels eines ersten thermischen Spritzverfahrens, insbesondere mittels Kaltgasspritzen, auf die elektrisch isolierende Beschichtung (35) aufgesprüht werden.

19. Verfahren nach einem der Ansprüche 15 bis 18,
wobei die Leiter (30) durch eine elektrisch isolierende Leiterbeschichtung (42) isoliert werden,
welche durch Anodisieren hergestellt wird.

20. Verfahren nach Anspruch 19,
wobei auf die Leiter (30) ein dritter metallischer Werkstoff, insbesondere mittels Kaltgasspritzen, additiv aufgebracht wird und
wobei die elektrisch isolierende Leiterbeschichtung (42) durch zumindest teilweises Anodisieren des dritten metallischen Werkstoffs hergestellt wird.

21. Verfahren nach einem der Ansprüche 15 bis 20,
wobei die Leiter (30) über zumindest je eine Zwischenschicht (36) mit der elektrisch isolierenden Beschichtung (35) verbunden werden.

22. Verfahren nach Anspruch 21,
wobei die Zwischenschicht (36) mittels eines zweiten additiven Fertigungsverfahrens auf die elektrisch isolierende Beschichtung (35) aufgebracht wird,
wobei sich das zweite thermische Spritzverfahren vom ersten thermischen Spritzverfahren unterscheidet.

23. Verfahren nach Anspruch 22,
wobei das erste additive Fertigungsverfahren ein erstes thermisches Spritzverfahren ist,
wobei das zweite additive Fertigungsverfahren ein zweites thermisches Spritzverfahren ist,
wobei sich das zweite thermische Spritzverfahren hinsichtlich einer Geschwindigkeit und/oder einer Größe der Partikel vom ersten thermischen Spritzverfahren unterscheidet.

24. Verfahren nach einem der Ansprüche 21 bis 23,
wobei die Zwischenschicht (36) zumindest teilweise in Nuten (38) des Grundkörpers (26, 28) angeordnet wird, wobei die Nuten (38) des Grundkörpers (26) eine Profilierung (40) aufweisen, über welche die formschlüssige Verbindung hergestellt wird.
